# EUROPEAN PATENT APPLICATION

(11) **EP 4 002 251 A1**
(43) Date of publication of application: **25.05.2022**
(21) Application number: 21206622.9
(22) Date of filing: 05.11.2021
(51) Int. Cl.: G06Q 30/00, G06Q 20/02

(54) **METHOD FOR PROVIDING AUTHENTICITY INFORMATION**

(30) Priority: 18.11.2020 EP 20208342
(71) Applicant: BOBST MEX SA, 1031 Mex (CH)
(72) Inventor: MANOUSAKIS, Stylianos, 10-308020 Barcelona (ES)
(74) Representative: Wagner, Sigrid

(57) **Abstract**

A method for providing authenticity information has the following steps:
a) providing a blank packaging (11) for a product to a printing machine (12),
b) receiving or generating a template of the visual identifier (40) by the printing machine (12),
c) applying, in particular printing, at least the visual identifier (40) on the packaging (11) by the printing machine (12),
d) providing the packaging (11) having the visual identifier (40) to the quality control unit (14),
e) receiving a packaging (11) for a product by a quality control unit (14), the packaging (11) having a visual identifier (40),
f) reading the visual identifier (40) by the quality control unit (14),
g) creating a first block (B), being a block of a blockchain, based on the visual identifier (40) by the quality control unit (14), the block comprising information about the visual identifier (40) and information about the packaging (11), and
h) providing the first block (B) to the associated blockchain network (20) by the quality control unit (14).

Further, a quality control unit (14) and a system (10) are shown.

## Description

The invention relates to a method for providing authenticity information, in particular for a packaging, as well as a control unit and a system comprising a quality control unit and a printing machine.

Protection against counterfeit products are a vital necessity for any company selling high-quality products under a brand name.

Known measures against counterfeiting are the use of security features that are applied directly to the product and/or the packaging of the product. However, security features do not offer protection for the brand owner if products or solely the packagings for products are being stolen in the supply chain.

It is therefore an object of the invention to provide a way to associate authenticity information with a packaging and/or a product that does not have the mentioned drawbacks.

For this purpose, a method for providing authenticity information is provided. The method comprises the following steps:
a) providing a blank packaging (11) for a product to a printing machine (12),
b) receiving or generating a template of the visual identifier (40) by the printing machine (12),
c) applying, in particular printing, at least the visual identifier (40) on the packaging (11) by the printing machine (12),
d) providing the packaging (11) having the visual identifier (40) to the quality control unit (14),
e) receiving a packaging for a product by a quality control unit, the packaging having a visual identifier,
f) reading the visual identifier by the quality control unit,
g) creating a first block, being a block of a blockchain, based on the visual identifier by the quality control unit, the block comprising information about the visual identifier and information about the packaging, and
h) providing the first block to the associated blockchain network by the quality control unit.

By creating a first block in a blockchain that contains information about the visual identifier applied to the packaging of the product, the supply chain can be tracked right from the beginning in a centralized and controllable way, which is protected by the trust in the blockchain. Thus, it does not matter how well a counterfeited packaging is printed. If it does not pass the quality control unit, the packaging will not be registered in the blockchain and it will never be possible to move to the next stage of the supply chain without being noticed.

Further, in comparison to a barcode, more information and data may be added to and protected by the blockchain that is associated with the very packaging. It also eliminates the need of having to add additional identifiers during the production/packing process of the product.

Even though the packaging does not include the actual product to be protected, usually a consumer assumes that the product inside a packaging conforms to the packaging itself so that counterfeit protection is started at the very first step in the manufacturing process.

The first block is for example not a genesis block but may be a genesis block in some embodiments.

The visual identifier may be present in the first block as a transaction or part of a transaction. The first block may contain a link to a resource, like a cloud server, at which the visual identifier is stored.

The quality control unit may function as a node for the blockchain network by the quality control unit, in particular a full node. This way, the first block is provided to the blockchain network directly.

Other advantages of having the quality control unit acting also as node of the blockchain network is that it is faster and more secure.

According to a preferred embodiment of the invention the printing machine receives an image to be printed onto the blank packaging, wherein the image comprises the visual identifier being unique to each piece of the product, each batch of the product, the type of the product or any other classification desired to identify groups or subgroups of a manufacturing process and/or a supply chain,
wherein the packaging is passed by an image capture device of the quality control unit, wherein the image capture device captures the image and generates a captured image of the image printed onto the packaging, and
wherein the captured image is passed to a computing unit of the quality control unit, wherein the computing unit extracts the visual identifier from the image.

For example, the information about the visual identifier and/or the information about the packaging are used as input to a hash function to determine the hash of the first block in order to protect the information about the visual identifier and about the packaging through the integrity of the blockchain.

The hash function is preferably the hash function used in the specific blockchain of the blockchain network.

In order to introduce the packaging into the blockchain in a well-controlled manner, the first block may be the first block of the blockchain that includes and/or refers to the visual identifier of the packaging.

Via the visual identifier, the real-life packaging and/or the packed product in the packaging is permanently and inalterable connected to the first block of the blockchain. Thus, any information about the packaging and/or the product placed in the packaging that shall be securely documented can be stored in the blockchain in blocks referring directly or via intermediate blocks to this first block.

The transaction to introduce the visual identifier in block may be regarded as a transaction analog to the coinbase transaction in a bitcoin blockchain.

In an embodiment, the visual identifier is a barcode, a 2-dimensional barcode, a multidimensional code, a hologram and/or a characteristic of an image printed onto the packaging so that well established or easy to print visual identifiers can be used.

For example, the characteristic of the image printed onto the packaging is the motif of parts and/or of the entire the image; the color of parts and/or of the entire the image; the use and type of a specific varnish; and/or the use and type of a security ink. This way, the visual identifier is applied to the packaging but without being immediately noticeable by a consumer.

In order to allow tracking of the packaging, the information about the packaging may include information about the supplier of the packaging, in particular the name and/or a supplier number, information about the machine used to manufacture the packaging, in particular the printing machine, the date and/or time of manufacture of the packaging, a product identification and/or information about the quality of the packaging.

The product id may be supplied by the brand owner.

In an embodiment, the information about the quality of the packaging includes information about the quality of the print on the packaging, in particular a captured image of the print on the packaging; a link to a resource storing the captured image of the print on the packaging; dimensions of the print on the packaging; the correctness of dielines of the print on the packaging; text correctness of the print on the packaging; and/or the grading of the barcode in the print on the packaging. This way, the quality of the original print is documented in case the packaging is damaged in transport.

The captured image is in particular the image captured during quality control by the quality control unit.

In an aspect of the in invention, the visual identifier is supplied to the quality control unit, e.g. by the brand owner, or generated by the quality control unit.

In another embodiment, the method further comprises the steps of:
a) providing a blank packaging for a product to a printing machine,
b) receiving or generating a template of the visual identifier by the printing machine,
c) applying, in particular printing, at least the visual identifier on the packaging by the printing machine, and
d) providing the packaging having the visual identifier to the quality control unit.

This way, the first block is created immediately after printing, i.e. manufacture of the packaging.

For example, the printing machine receives the visual identifier from a server of the system, supplied to printing machine, e.g. by the brand owner, or generated by the printing machine.

In another embodiment, the method further comprises at least one of the following steps:
a) packing the product into the packaging, the packing includes capturing the visual identifier on the packaging and creating a block and/or a blockchain transaction, wherein the block and/or the transaction are based on information about the product and on the first block and/or a subsequent block associated with the captured visual identifier,
b) shipping the packaging and/or the packed product to a different site, wholesaler and/or shop, the shipping includes capturing the visual identifier on the packaging and creating a block and/or a blockchain transaction, wherein the block and/or the transaction is based on information about the shipping and on the first block and/or a subsequent block associated with the captured visual identifier,
c) selling the packaging and/or the packed product, the selling includes capturing the visual identifier and creating a block and/or a blockchain transaction, wherein the block and/or the transaction is based on information about the sale and on the first block and/or a subsequent block associated with the captured visual identifier, and
d) stopping the distribution of the packaging and/or the packed product having a specific visual identifier by creating a block and/or a blockchain transaction based on the information that distribution of the packaging and/or the product is stopped and based on the first block and/or a subsequent block associated with the specific visual identifier.

This way, the full supply chain of the packaging and/or the packed product is securely documented in the blockchain and/or distribution of the packaging and/or the packed products can be controlled, e.g. stopped, remotely.

The information about the product may include the batch number of the product, the manufacturing date and/or time of the product, the manufacturing site of the product, the manufacturing site performing packing, the designated point of sale of the product and/or a supplier identification.

The information about the shipping may include the date and/or time of shipping, the sender, the recipient and/or product properties during shipping, like the temperature of the product.

The information about the sale may include the date and/or time of sale, the point of sale, the purchaser and/or the price.

The information about the product, shipping and/or sale are used as input to the hash function to determine the hash of the respective block and/or parts of the respective block.

A subsequent block associated with the visual identifier is understood to be a block of the blockchain that refers directly or via other intermediate subsequent blocks to the first block, i.e. by a chain of transactions that can be traced to the first block or to the transaction of the first block introducing the specific visual identifier into the blockchain.

In an aspect, the authenticity of the packaging and/or the packed product is verified during the packing step, the shipping step and/or the selling step by verifying whether the block and/or transaction generated during the packing step, the shipping step and/or the selling step is in conformity with the blockchain.

If the block and/or transaction in question is not a valid block or transaction for the blockchain, irregularities during the supply chain have occurred so that the packaging and/or the packed product is not regarded as authentic. Thus, the authenticity of the packaging and/or the packed product is verified automatically each time a block relating to the packaging and/or the packed product is to be entered into the blockchain.

In addition or alternatively, the authenticity of the packaging and/or the packed product is verified by capturing the visual identifier of the packaging and/or the packed product to be authenticated, locating the first block and/or a subsequent block associated with the captured visual identifier and comparing the information contained in the first block and/or the subsequent block associated with the captured visual identifier with the packaging and/or the packed product to be authenticated.

Information about the current location and other characteristics of the packaging and/or the packed product may be compared to information stored in the first block and/or a subsequent block associated with the visual identifier.

Thus, by reading the visual identifier of a packaging and/or the packed product, the current possessor of the packaging and/or the packed product can verify the authenticity of it via the information stored in the blockchain.

For above purpose, a quality control unit is further provided, the quality control unit having an image capture device and a computing unit, wherein the image capture device is configured to capture a visual identifier of a packaging, wherein the computing unit is connected to a blockchain network, and wherein the computing unit is configured to create a first block, being a block of a blockchain, based on the visual identifier captured by the image capture device, the block comprising information about the captured visual identifier and information about the packaging, and configured to provide the first block to the associated blockchain network.

The features and advantages discussed with respect to the method also apply to the quality control unit and vice versa. Of course, the components of the quality control unit are configured to perform the tasks of the method.

In an embodiment, the computing unit is a node, in particular a full node, of the blockchain network so that the first block can be introduced into the blockchain securely and immediately.

In particular, the quality control unit is configured to perform a method as described above.

Further, for above purpose, a system is provided comprising a quality control unit as described above and a printing machine configured to apply a visual identifier to a packaging for a product, in particular wherein the system is configured to perform a method as described above.

The features and advantages discussed with respect to the method and with respect to the quality control unit also apply to the system and vice versa. Of course, the components of the system are configured to perform the tasks of the method.

Further features and advantages will be apparent from the following description as well as the accompanying drawings, to which reference is made. In the drawings:
- Figure 1 shows a schematic overview of a system according to the invention having a quality control unit according to the invention,
- Figure 2 shows a flow chart of a method according to the invention, and
- Figures 3a and 3b show examples of an image printed onto the packaging.

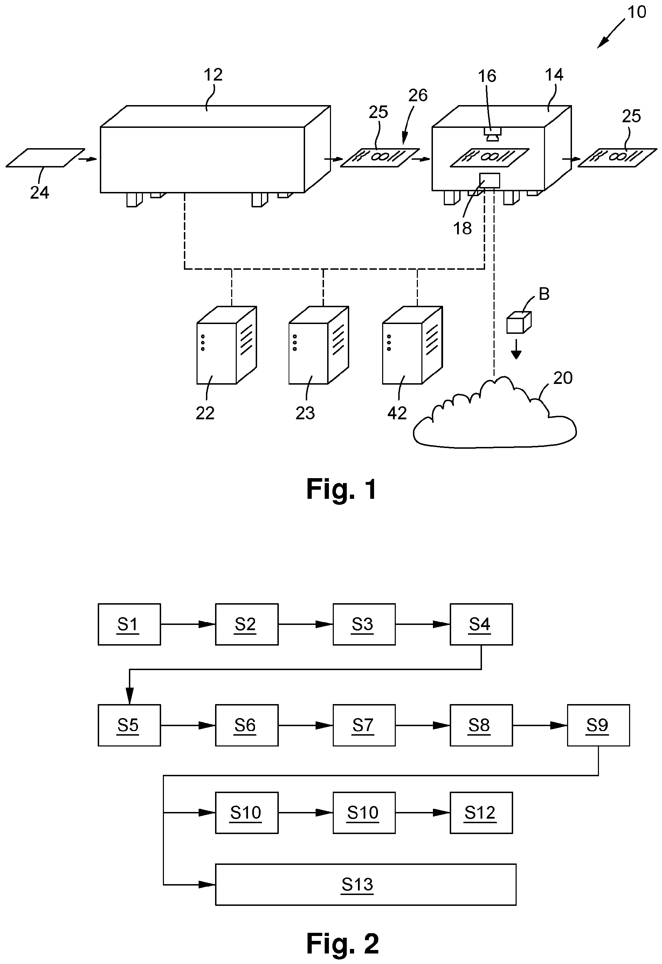

Figure 1 shows schematically a system 10 for manufacturing packaging 11 for a product.

The system 10 comprises a printing machine 12 and a quality control unit 14.

The printing machine 12 is a printing machine for applying a print onto paper and cardboard, especially onto flat sheets of paper or cardboard used to fold the packaging 11 for the product. Such machines are well known in the art. For example, the printing machine 12 may be a digital printing machine.

It is also possible, that the printing machine 12 is a machine for applying a hologram onto the flat sheet 24 of paper or cardboard.

The quality control unit 14 comprises an image capture device 16 and a computing unit 18.

The computing unit 18 of the quality control unit 14 is a node for a blockchain network 20, which is illustrated as a cloud in Figure 1. For example, the computing unit 18 is a full node of the blockchain network 20.

The blockchain network 20 can make use of any blockchain technology known in the art.

Of course and illustrated with the dashed line, the computing unit 18 is connected to the other parts of the blockchain network 20.

Figure 1 also shows two servers 22 and 23 connected to the printing machine 12 and/or the quality control unit 14.

The server 22 may be a control server 22 of the system 10.

The server 23 may be the server of a brand owner of the product to be packed in the packaging 11. It this case, the server 23 is connected to the printing machine 12 and the quality control unit 14 via internet, for example.

In order to provide a printed packaging 11 for a specific product, the system 10 carries out the method shown as a flow chart in Figure 2.

In a first step, an unprinted, blank packaging is provided to the printing machine 12 (step S1). Usually, the blank packaging is a sheet 24 of paper or cardboard, which is blank, i.e. unprinted.

At the same time or previously, the printing machine 12 receives in step S2 an image 26 to be printed onto the sheet 24.

The image 26 is, for example, provided to the printing machine 12 by the server 22 or by the brand owner directly via server 23.

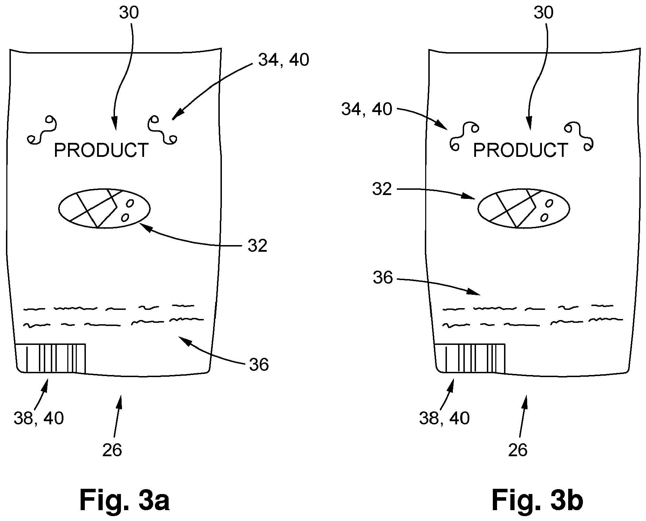

An example of an image 26 printed onto the sheet 24 is shown in Figures 3a and 3b schematically.

The image 26 comprises, for example, the name 30 of the product, a logo 32 of the brand owner of the product, a motif 34 for decoration, a product description 36 of the product, and/or a barcode 38.

The barcode 38 may be a one-dimensional barcode, a two-dimensional barcode, a multi-dimensional code or a hologram.

The image 26 also comprises a visual identifier 40 unique to each piece of the product, each batch of the product, the type of the product or any other classification desired to identify groups or subgroups of the manufacturing process and/or the supply chain.

The barcode 38 may be used as the visual identifier 40.

However, it is also possible to use other features of the image 26 as the visual identifier 40. For example, the visual identifier 40 may be the motif 34 of the image 26, which may be altered slightly to be distinguishable from other, similar motifs 34 that are then a different visual identifier 40.

For example, in the examples shown in Figures 3a and 3b, the motif 34 comprises decorative lines around the product name 30, which are used as a visual identifier 40. The direction of the spirals of the lines are reversed between Figure 3a and Figure 3b and thus create a distinction. This distinction can be regarded as the "code" of the visual identifier 40 just like the code encoded in a barcode.

In particular, if the printing machine 12 is a digital printing machine, the differences in the image 26 and motif 34 may be very small and subtle so that the visual identifier 40 may be used to differentiate between hundreds or even thousands of images 26. For example, if the motif 34 includes a tree with branches and leaves, small differences in the arrangement of the branches and leaves lead to different images 26 that can be used in much the same way as the barcode known in the art. However, to a human observer, the image 26 gives the same overall impression.

In addition or as an alternative, the color of parts of the image 26 or of the entire image 26 may be used as a visual identifier 40. Slight color changes within a range that is not discernable with a human eye but which can be detected, for example by the image capture device 16 of the quality control unit 14, may also be used as a visual identifier 40.

Further, special varnishes and/or the use of a security ink may constitute the visual identifiers 40.

The template of the visual identifier 40 may be supplied to the printing machine 12 by the server 22 or 23, for example the brand owner directly, or the quality control unit 14. The quality control unit 14 may have generated the template of the visual identifier 40 beforehand. Alternatively, the printing machine 12 may have generated the template of the visual identifier 40.

In the next step S3, the image 26 is printed onto the sheet 24 together with the visual identifier 40.

In case that the visual identifier 40 is a hologram, the hologram may be applied to the sheet 24.

In step S4, the printed sheet 24, which is now the printed packaging 11 having the visual identifier 40, is transferred from the printing machine 12 to the quality control unit 14.

Needless to say, the quality control unit 14 comprises means for receiving and transferring the received packaging 11.

In the quality control unit 14, the packaging 11 is passed by the image capture device 16 which captures an image of print on the packaging 11, i.e. at least the image 26. The image capture device 16 generates a captured image of image 26 printed onto the packaging 11 (step S5).

Based on the captured image, the quality control unit 14 performs tests and comparisons of the print on the packaging 11 against a template of the image 26 in a fashion well known in the art.

This way, quality information about the print on the packaging 11 is obtained.

The information about the quality of the print on the packaging 11 may include the dimensions of the print on the packaging 11, the correctness of dielines of the print, the text correctness of text of the print, e.g. the barcode 38 and the product name 30 and/or a grade of the quality of the visual identifier 40, for example the barcode 38.

The quality information may also include the captured image and/or the visual identifier 40 of the print on the packaging 11. Alternatively, the captured image may be uploaded to a resource 42 storing the captured image, for example a cloud server, and the quality information contains in these cases a link to the resource 42.

The captured image is passed to the computing unit 18, which extracts the visual identifier 40 from the image 26. Thus, the visual identifier 40 has been read or captured from the packaging 11 (step S6).

In the next step S8, the computing unit 18 creates a first block B of the blockchain of the blockchain network 20 based on the visual identifier 40 that has been read from the captured image and based on information about the packaging 11.

The first block B then comprises information about the visual identifier 40 itself, for example as a copy of the visual identifier 40 or a link to the resource 42 storing the visual identifier 40.

The information about the packaging 11 stored in the first block B may comprise information about the supplier of the packaging 11, in particular the name and/or a supplier number, information about the printing machine 12 and/or other machines used to manufacture the packaging 11, the date and/or time of manufacture of the packaging 11.

The information about the packaging 11 may also include a product identification of the product to be packed into the packaging 11. The product identification may be supplied by the brand owner, e.g. via server 23.

The information about the packaging may be gathered and generated by the quality control unit 14 itself, at least in parts, and/or supplied to the quality control unit 14 by the server 22, for example directly from the product owner in case of the product identification.

The information about the packaging 11 may also include the designated point of sale of the product.

Further, the information about the packaging 11 may include information about the quality of the packaging, in particular the information about the quality of the print on the packaging 11, generated by the quality control unit 14.

The information for the first block B may be saved as part of the block, for example as part of a transaction of the block.

It is possible that other, unrelated information is also present in the first block B.

The information about the visual identifier 40 and/or the information about the packaging 11 are used as an input to the hash function used in the specific blockchain of the blockchain network 20. In this way, the hash of the first block B may be determined. The visual identifier 40 and the information about the packaging 11 become a part of the block protected by the integrity of the blockchain.

The first block B is, for example, not a genesis block starting a new blockchain but rather the first block B that contains information about the visual identifier 40 captured by the quality control unit 14, e.g. the block that actually includes the visual identifier 40 or a link to the visual identifier 40 of the packaging 11. Of course, the first block B may also be a genesis block in case of a unique product, like a customized book.

Then, in step S9, the first block B is provided to the blockchain in network 20 as the computing unit 18 functions as a node of the blockchain network 20.

The blockchain of the blockchain network 20 now comprises the first block B associated with the visual identifier 40 of the packaging 11 so that any further processing of the packaging 11 and/or the product packed in the packaging 11 may be stored in the blockchain in subsequent blocks referring to the first block B in the way specified by the blockchain used in the blockchain network 20.

For example, at a later stage (step S10), the product has to be packed into the packaging 11. In the course of packing the product into the packaging 11, the visual identifier 40 of the packaging 11 is read/captured.

To this end, a quality control unit similar to the quality control unit 14 may be present at the manufacturing site where the product is packed into the packaging 11. Based on the visual identifier 40 that is captured during the packing of the product and information about the product packed into the packaging 11, a further, subsequent block of the blockchain or a blockchain transaction in the blockchain are generated.

The newly generated subsequent block builds on or refers to the first block B generated right after printing of the packaging 11 and contains additional information about the product.

The information about the product may include the batch number of the product, the manufacturing date and/or time of the product, the manufacturing site of the product, the manufacturing site performing the packing, the designated point of sale of the product and/or a supplier identification.

The information about the product is - similarly as explained above in context of the generation of the first block B - used as an input to the hash function of the blockchain used. Thus, the hash of the respective block and/or parts of the respective block depend on the information about the product so that the information about the product is linked to the visual identifier 40 and to the information about the packaging 11 in the first block B. The information about the product is therefore protected by the integrity of the blockchain.

Likewise, information about other steps during the supply chain may be entered into the blockchain, like the shipping of the packaging 11 before packing the products and/or the shipping of the packed product to a wholesaler and/or a shop.

Similarly, as explained in context of the packing, during shipping at the point in time when the packaging 11 or the packed product leaves a warehouse, the visual identifier 40 is captured and a block and/or a blockchain transaction are generated (step S11).

The block and/or blockchain transaction includes information about the shipping and refers to the first block B and/or a subsequent block of the blockchain associated with the visual identifier 40, for example a block generated during the packing the product into the packaging 11.

The information about the shipping may include the date and/or time of shipping, the sender, the recipient and/or product properties during shipping, like the temperature of the product. Again, according to the specifics of the blockchain, the information about the shipping is used as an input to the hash function to determine the hash of the respective block.

In addition or in the alternative, at the sale of the packed product, the visual identifier 40 is read/captured and a block and/or a blockchain transaction may be created (step S12) in the manner as described for the packaging and the shipping.

The information about the sale that may be included in the block or blockchain transaction may include the date and time of sale, the point of sale, the purchaser and/or the price.

In this way, the blockchain contains details about the supply chain and the packaging 11 so that the authenticity of the packaging and the product packed in the packaging may be verified at any time.

In fact, every time a new block and/or blockchain transaction is entered into the blockchain referring to the first block B, the authenticity of the packaging 11 is verified because an irregularity in the supply chain, e.g. if products are stolen and thus not cleared for sale in the blockchain, will automatically lead to the situation that the block or blockchain transaction to be entered into the blockchain will be refused due to nonconformity with the information present in the blockchain.

It is also possible to stop the distribution of the packaging 11 or the product in the packaging by creating a block and/or a blockchain transaction in the blockchain. This block has the information that the distribution of the product and/or the packaging 11 is to be stopped and refers to the first block B and/or any subsequent block associated with the specific visual identifier 40 of the packaging 11 whose distribution is to be stopped (step S13).

Further, the authenticity of the packaging 11 and/or the packed product may be verified by reading the visual identifier 40 of the packaging 11 to be authenticated.

With the captured visual identifier 40 read from the product and/or packaging 11 to be authenticated, the first block B and all of the subsequent blocks associated with the this specific captured visual identifier 40, can be identified. The information about the visual identifier 40, the information about the packaging 11, the information about the packing, the information about the shipping and/or the information about the sale may be extracted from these blocks and compared to the situation at hand, for example if the distribution has been stopped, because the packaging used is reported as stolen or if the packaging 11 and/or the product to be authenticated is actually at the location indicated at the designated point of sale of the product.

Thus, by creating a first block B in the blockchain linking the packaging 11 via the visual identifier 40 with a block in the blockchain, the authenticity of the packaging 11 can be traced in a secure way without the risk of manipulation.

## Claims

1. Method for providing authenticity information comprising the following steps:
a) providing a blank packaging (11) for a product to a printing machine (12),
b) receiving or generating a template of the visual identifier (40) by the printing machine (12),
c) applying, in particular printing, at least the visual identifier (40) on the packaging (11) by the printing machine (12),
d) providing the packaging (11) having the visual identifier (40) to the quality control unit (14),
e) receiving a packaging (11) for a product by a quality control unit (14), the packaging (11) having a visual identifier (40),
f) reading the visual identifier (40) by the quality control unit (14),
g) creating a first block (B), being a block of a blockchain, based on the visual identifier (40) by the quality control unit (14), the block comprising information about the visual identifier (40) and information about the packaging (11), and
h) providing the first block (B) to the associated blockchain network (20) by the quality control unit (14).

2. Method according to claim 1, wherein the printing machine (12) receives an image (26) to be printed onto the blank packaging (11), wherein the image (26) comprises the visual identifier being unique to each piece of the product, each batch of the product, the type of the product or any other classification desired to identify groups or subgroups of a manufacturing process and/or a supply chain ,
wherein the packaging (11) is passed by an image capture device (16) of the quality control unit (14), wherein the image capture device (16) captures the image (26) and generates a captured image of the image (26) printed onto the packaging (11), and
wherein the captured image is passed to a computing unit (18) of the quality control unit (14), wherein the computing unit (18) extracts the visual identifier (40) from the image (26).

3. Method according to claim 1 or 2, **characterized in that** the information about the visual identifier (40) and/or the information about the packaging (11) are used as input to a hash function to determine the hash of the first block (B).

4. Method according to claim 3, **characterized in that** the first block (B) is the first block (B) of the blockchain that includes and/or refers to the visual identifier (40) of the packaging (11).

5. Method according to any one of the preceding claims, **characterized in that** the visual identifier (40) is a barcode, a 2-dimensional barcode, a multidimensional code, a hologram and/or a characteristic of an image (26) printed onto the packaging (11), in particular wherein the characteristic of the image (26) printed onto the packaging (11) is the motif of parts and/or of the entire the image (26); the color of parts and/or of the entire the image (26); the use and type of a specific varnish; and/or the use and type of a security ink.

6. Method according to any one of the preceding claims, **characterized in that** the information about the packaging (11) includes information about the supplier of the packaging (11), in particular the name and/or a supplier number, information about the machine used to manufacture the packaging (11), in particular the printing machine (12), the date and/or time of manufacture of the packaging (11), a product identification and/or information about the quality of the packaging (11).

7. Method according to claim 6, **characterized in that** the information about the quality of the packaging (11) includes information about the quality of the print on the packaging (11), in particular a captured image of the print on the packaging (11); a link to a resource storing the captured image of the print on the packaging (11); dimensions of the print on the packaging (11); the correctness of dielines of the print on the packaging (11); text correctness of the print on the packaging (11); and/or the grading of the barcode (38) in the print on the packaging (11).

8. Method according to any one of the preceding claims, **characterized in that** the visual identifier (40) is supplied to the quality control unit (14) or generated by the quality control unit (14).

9. Method according to any one of the preceding claims, **characterized by** at least one of the following steps:
a) packing the product into the packaging (11), the packing includes capturing the visual identifier (40) on the packaging (11) and creating a block and/or a blockchain transaction, wherein the block and/or the transaction are based on information about the product and on the first block (B) and/or a subsequent block associated with the captured visual identifier (40),
b) shipping the packaging (11) and/or the packed product to a different site, wholesaler and/or shop, the shipping includes capturing the visual identifier (40) on the packaging and creating a block and/or a blockchain transaction, wherein the block and/or the transaction is based on information about the shipping and on the first block (B) and/or a subsequent block associated with the captured visual identifier (40),
c) selling the packaging (11) and/or the packed product, the selling includes capturing the visual identifier (40) and creating a block and/or a blockchain transaction, wherein the block and/or the transaction is based on information about the sale and on the first block (B) and/or a subsequent block associated with the captured visual identifier (40), and
d) stopping the distribution of the packaging (11) and/or the packed product having a specific visual identifier (40) by creating a block and/or a blockchain transaction based on the information that distribution of the packaging (11) and/or product is stopped and on the first block (B) and/or a subsequent block associated with the specific visual identifier (40).

10. Method according to claim 9, **characterized in that** during the packing step, the shipping step and/or the selling step the authenticity of the packaging (11) and/or the packed product is verified by verifying whether the block and/or the transaction generated during the packing step, the shipping step and/or the selling step is in conformity with the blockchain.

11. Method according to any one of the preceding claims, **characterized in that** the authenticity of the packaging (11) and/or the packed product is verified by capturing the visual identifier (40) of the packaging and/or the packed product to be authenticated, locating the first block (B) and/or a subsequent block associated with the captured visual identifier (40) and comparing the information contained in the first block (B) and/or the subsequent block associated with the captured visual identifier (40) with the packaging (11) and/or the packed product to be authenticated.

12. Quality control unit comprising an image capture device (16) and a computing unit (18), wherein the image capture device (16) is configured to capture a visual identifier (40) of a packaging (11), wherein the computing unit (18) is connected to a blockchain network (20), and wherein the computing unit (18) is configured to create a first block (B), being a block of a blockchain, based on the visual identifier (40) captured by the image capture device (16), the block comprising information about the captured visual identifier (40) and information about the packaging (11), and configured to provide the first block (B) to the associated blockchain network.

13. Quality control unit according to claim 12, **characterized in that** the computing unit (18) is a node, in particular a full node, of the blockchain network (20).

14. Quality control unit according to claim 12 or 13, **characterized in that** the quality control unit (14) is configured to perform steps e) to h) a method according any one of the claims 1 to 8.

15. System comprising a quality control unit (14) according to any one of claims 12 to 14 and a printing machine (12) configured to apply a visual identifier (40) to a packaging (11) for a product, wherein the system (10) is configured to perform a method according to any one of the claims 1 to 11.
